# EUROPÄISCHE PATENTANMELDUNG

(11) **EP 3 528 020 A1**
(43) Veröffentlichungstag der Anmeldung: **21.08.2019**
(21) Anmeldenummer: 19154517.7
(22) Anmeldetag: 30.01.2019
(51) Int. Cl.: G02B 6/26, G02B 6/36, G02B 6/42, G01M 11/08

(54) **VERFAHREN ZUR IMPLEMENTIERUNG UND ANBINDUNG STRUKTURINTEGRIERTER LICHTWELLENLEITER**

(30) Priorität: 15.02.2018 DE 102018103452
(71) Anmelder: Airbus Defence and Space GmbH, 82024 Taufkirchen (DE)
(72) Erfinder: FUNKE, Matthias, 82024 Taukirchen (DE); DRAPER, Jonathan, 82024 Taufkirchen (DE); GRUBER, Maria, 82024 Taufkirchen (DE); MEILINGER, Jürgen, 82024 Taufkirchen (DE); SÜSS, Manuela, 82024 Taufkirchen (DE); ROTH, Thomas, 82024 Taufkirchen (DE)

(57) **Zusammenfassung**

Es wird ein Verfahren zur Implementierung und Anbindung wenigstens eines strukturintegrierten Lichtwellenleiters in einem Laminatbauteil angegeben. Bei dem Verfahren wird wenigstens ein Lichtwellenleiter an einer vorbestimmten Position während eines Ablagevorgangs eines Laminates zur Herstellung eines Laminatbauteils eingebracht. Weiter wird das Laminatbauteil fertiggestellt, wobei der Lichtwellenleiter vollständig von dem Laminat umgeben ist. Weiter wird wenigstens ein Ende des Lichtwellenleiters freigelegt. An dem wenigstens einem freigelegten Ende wird weiter ein Einkoppelbauteil angebracht.

## Beschreibung

Verschiedene Ausführungsformen betreffen allgemein ein Verfahren zur Implementierung und Anbindung strukturintegrierter Lichtwellenleiter in Laminaten.

Bislang ist es nicht möglich gewesen Laminatbauteile oder Composite-Strukturbauteile beliebiger Industrien mit strukturintegrierten Sensor- und/oder Kommunikationsfasern auszustatten und die dafür benötigten optischen Interfaces zuverlässig im Herstellungsprozess zu integrieren ohne dass diese den Herstellungsprozess zu stark beeinflussen oder die Gefahr besteht die Fasern im Herstellungsprozess zu beschädigen. Benötigt werden solche Einbauten um zum einen abnutzungsfreie und integrierte Lösungen für Kommunikation in Composite-Bauteilen zu ermöglichen, und/oder diese Composite-Bauteile mithilfe der gleichen Faser auf Belastung, Alterungserscheinungen, Bruch, Verformung, Temperaturverteilung oder akustisch zu überprüfen. Dies gilt für Composite-Bauteile während der Integration, sowie für die Messung während der gesamten Lebensdauer. Die Gründe dafür sind vielfältig, liegen dabei hauptsächlich aber in der Problematik der Steckeranbindung sowie in der Integration der Faser in den Werkstoff selbst. Beeinflusst wird die mechanische Integrität der erzeugten Struktur und ggf. deren Stabilität und Festigkeit. Ebenso sind keine Standardstecker am Markt vorhanden die während der Herstellung des Materials integriert werden können, bedingt durch den Herstellungsprozess der Composite-Struktur.

Davon ausgehend ist es Aufgabe der Erfindung, ein verbessertes Verfahren zur Integration eines Lichtwellenleiters in einem Laminat bereitzustellen.

Diese Aufgabe wird mit einem Verfahren mit den Merkmalen des Anspruchs 1 gelöst. Beispielhafte Ausführungsformen sind in den abhängigen Ansprüchen dargestellt. Es sei darauf hingewiesen, dass die Merkmale der Ausführungsbeispiele der Vorrichtungen auch für Ausführungsformen des Verfahrens sowie Verwendung der Vorrichtung gelten und umgekehrt.

Die Aufgabe wird durch ein Verfahren zur Implementierung und Anbindung wenigstens eines strukturintegrierten Lichtwellenleiters in einem Laminatbauteil gelöst. Bei dem Verfahren wird wenigstens ein Lichtwellenleiter an einer vorbestimmten Position während eines Ablagevorgangs eines Laminates zur Herstellung eines Laminatbauteils eingebracht. Weiter wird das Laminatbauteil fertiggestellt, wobei der Lichtwellenleiter vollständig von dem Laminat umgeben ist. Weiter wird wenigstens ein Ende des Lichtwellenleiters freigelegt. An dem wenigstens einem freigelegten Ende wird weiter ein Einkoppelbauteil angebracht.

Der Erfindung liegt der Gedanke zugrunde, durch beispielsweise einen hochpräzisen Roboter einen Lichtwellenleiter, wie beispielsweise eine Kommunikations- und/oder Sensorikfaser während des Herstellungsprozesses eines Laminates in die Struktur einzubringen und die exakte Position der Faser in der Struktur für eine spätere Verwendung zu speichern. Nach diesem Schritt wird das Laminat bzw. die Composite-Struktur nach den bekannten Verfahren fertiggestellt. Nach Fertigstellung der Struktur wird beispielsweise an jedem beliebigen Zugangspunkt zur Faser diese beispielweise durch Bohrung freigelegt. Das somit freigelegte Faserende wird nun speziell behandelt. Das somit endbehandelte und hochpräzise lokalisierte Faserende erhält nun ein weiteres Bauteil, das in bzw. an den Zugangspunkt (z.B. die Bohrung) eingebracht wird. Dieses Bauteil hat die Aufgabe, den Lichtstrahl vom/zur Faser aus dem Bauteil heraus bzw. hinein zu lenken. Genauer gesagt wird der klassische Herstellungsprozess der Laminatstruktur nach Einbringung des Lichtwellenleiters unverändert beibehalten und die finalen Materialeigenschaften werden nach der Aushärtung beispielsweise in einem Autoklav erzeugt. Die finale Kontur des Bauteils bzw. der Bauteilstruktur wird unter Beachtung der bekannten Position des Wellenleiters im Laminat durch Standartbearbeitungsprozesse hergestellt. Nach Fertigstellung des Laminatbauteils wird wenigstens ein Ende des Lichtwellenleiters durch Fräsen oder der Verwendung eines Laserablationsprozesses freigelegt. Weiter wird das freigelegte Ende des Lichtwellenleiters aufbereitet und ein Einkoppelbauteil an dem aufbereiteten Ende des Lichtwellenleiters angebracht und fest mit der Struktur verbunden.

Unter dem Begriff Laminat beziehungsweise sind alle Arten von Werkstoffen zu verstehen, die aus zwei oder mehr verbundenen Materialien bestehen, wobei das Laminat beziehungsweise der Kompositwerkstoff andere Werkstoffeigenschaften aufweist als seine einzelnen Komponenten. Ein Laminat kann beispielsweise ein Kompositwerkstoff oder Verbundwerkstoff sein. Das Laminat kann beispielsweise aus Faserverbundmaterialien bestehen, die beispielsweise aus Glas oder Kohlefasern bestehen und beispielsweise mit einem Harzsystem getränkt und durch Aushärtung konsolidiert werden. Alternativ kann das Laminat auf weitere Komposite, beispielsweise auf Basis von metallischen und keramischen Materialein umfassen.

Unter dem Begriff vorbestimmte Position ist der möglichst exakte Verlauf des Lichtwellenleiters in dem Laminatbauteil zu verstehen, der ein eindeutiges Wiederauffinden des vorzugsweise vollständigen Lichtwellenleiters in dem Laminatbauteil ermöglicht. Die vorbestimmte Position umfasst beispielsweise für vorzugsweise die vollständige Länge des Lichtwellenleiters die genaue Position innerhalb des Laminatbauteils. Dies hat den Vorteil, dass bei zusätzlichen Ausfräsungen und Bohrungen, die beispielsweise später in das Bauteil eingebracht werden, die genaue Lage des Lichtwellenleiters bekannt ist. Vorzugsweise wird der Wellenleiter um derartige später hinzuzufügenden Bohrungen und Ausfräsungen herumgeführt. Zudem ist es auch vorteilhaft, wenn die genaue Position der Sensoren, also beispielsweise der Bragg Gratings in dem Lichtwellenleiter bekannt sind, um später zu wissen in welchen Bereich innerhalb des Laminatbauteils der erfasste Bereich liegt.

Unter dem Begriff Lichtwellenleiter beziehungsweise Lichtleiter ist jegliche Art von transparenten Bauteilen wie beispielweise Fasern, Röhren oder Stäbe zu verstehen, die in der Lage sind Licht über kurze oder lange Strecken zu transportieren, wobei die Lichtleitung durch Reflexion an der Grenzfläche des Lichtleiters entweder durch Totalreflexion auf Grund eines geringeren Brechungsindex das den Lichtleiter umgebenden Mediums oder durch Verspiegelung der Grenzfläche erreicht wird. Der Lichtwellenleiter kann hierbei beispielsweise als Multimode-Faser oder als Singlemode-Faser vorliegen.

Unter dem Begriff Position des Lichtwellenleiters ist jede Ortsangabe wenigstens eines Endes oder eines Abschnitts des Lichtwellenleiters zu verstehen, die ausreichend ist, um die genaue Position eines freizulegenden Endes des Lichtwellenleiters genau zu bestimmen. Die Positionsinformation darüber hinaus auch die Information enthalten, in welcher Tiefe, sprich zwischen welchen Lagen des Laminats sich der Wellenleiter befindet.

Unter dem Begriff Freilegung wenigstens eines Endes des Lichtwellenleiters ist jede Art von Freilegung wenigstens eines Endes des Lichtwellenleiters zu verstehen, wobei wenigstens die Querschnittsfläche des Lichtwellenleiters freigelegt und damit zugänglich gemacht wird. Unter der Freilegung ist aber auch eine Freilegung des wenigstens einen Endes zu verstehen, die neben wenigstens der Querschnittsfläche auch noch weitere Bereiche des wenigstens einen Endes des Lichtwellenleiters umfasst.

Wenn im Zusammenhang mit dieser Offenbarung von Licht die Rede ist, so sind hiermit allgemein elektromagnetische Wellen zu verstehen, welche sich durch optischen Medien leiten lassen. Eine Beschränkung auf das für das menschliche Auge sichtbare Licht ist nicht intendiert. Da das im Quarzglas eingelagerte Wasser Licht bei bestimmten Frequenzen überproportional dämpft werden bei Lichtwellenleiter beispielsweise in Bereichen liegen die vorzugsweise zwischen den Frequenzpeaks des Wassers liegen. Typische Wellenlängenbereiche die hierbei Verwendung finden liegen beispielswese zwischen etwa 790 nm und etwa 900 nm, um den Bereich von 1300 nm, um den Bereich zwischen 1500 nm und 1600 nm.

Gemäß einer Ausführungsform des Verfahren erfolgt die Freilegung wenigstens eines Endes des Lichtwellenleiters mittels Laser, Bohren oder Fräsen. Alternativ kann die Freilegung wenigstens eines Endes auch durch ein chemisches Verfahren, wie beispielsweise ätzen, oder durch Einsatz eines Lasers oder anderweiter Verfahren erfolgen, die in der Lage sind wenigstens ein Ende des Lichtwellenleiters freizulegen. Vorteilhafterweise wird hierzu eine Ausnehmung, Vertiefung oder ein Durchbruch durch das Werkstoffbauteil erzeugt. Vorzugsweise wird bei der Freilegung das wenigstens eine Ende des Lichtwellenleiters abgetrennt. Hierbei entsteht eine Schnittkante bzw. Querschnittsfläche an dem Ende des Lichtwellenleiters, die im Weiteren beispielsweise aufbereitet werden kann. Alternativ kann die Freilegung auch ohne oder mit nur einer minimalen Beschädigung des Lichtwellenleiters erfolgen. Dies hat den Vorteil, dass der Lichtwellenleiter von außen kontaktiert werden kann.

Gemäße einer Ausführungsform des Verfahrens ist das wenigstens eine freizulegende Ende des Lichtwellenleiters mit einer Schutzhülle umgeben. Die Schutzhülle kann nach dem Freilegen des wenigstens einen Endes wenigstens teilweise geöffnet oder entfernt werden. Das freizulegende Ende des Lichtwellenleiters ist hierbei beispielsweise in eine Schutzhülle aus Kunststoff, Metall oder anderen Materialien oder Materialkombinationen oder mehreren Schutzhüllen umgeben, die wenigstens die Enden des Lichtwellenleiters während der Herstellung des Laminats schützen. Beispielsweise kann das wenigstens eine mit einer Schutzhülle umgebene Ende geradlinig, aufgerollt, aufgewickelt, in Schlaufen oder anderweitig vorliegen. Alternativ kann auch der vollständige Lichtwellenleiter, d.h. über die gesamte Länge, mit einer Schutzhülle umgeben sein.

Gemäß einer Ausführungsform wird das wenigstens eine freigelegte Ende des Lichtwellenleiters aufbereitet wird. Um eine optimale optische Verbindung mit dem Lichtwellenleiter zu ermöglichen kann es vorteilhaft sein, das freigelegte Ende, d.h. zumindest die freigelegte Querschnittsfläche des freigelegten Endes, aufzubereiten.

Gemäß einer Ausführungsform des Verfahren erfolgt die Aufbereitung des wenigstens einen Endes des Lichtwellenleiters mittels Polieren oder Schleifen. Alternativ kann die Aufbereitung des Endes des Lichtwellenleiters auch durch jedes andere Verfahren durchgeführt werden, dass geeignet ist das Ende des Lichtwellenleiters für die weitere Benutzung, wie dem Anschluss des Koppelbauteils, vorzubereiten. Beispielsweise kann die Aufbereitung auch chemisch, mechanisch, thermisch oder auch optisch, beispielsweise mittels eines Lasers erfolgen. Dies hat den Vorteil, dass das aufbereitete Ende des Lichtwellenleiters möglichst keine Störungen oder Qualitätseinbußen eines ein- bzw. herausgeführten Lichtstrahls verursacht.

Gemäß einer Ausführungsform des Verfahren ist das Koppelbauteil dazu eingerichtet, einen in das Ende des Lichtwellenleiters eingeleiteten Lichtstrahl in und/ oder einen aus dem Ende des Lichtwellenleiters herausgeleiteten Lichtstrahl aus dem Laminatbauteil zu leiten. Als Koppelbauteil, oder auch optisches Empfänger- und/oder Senderbauelement, kann beispielsweise ein Spiegel verwendet werden, der dazu geeignet ist, einen Lichtstrahl in das zuvor aufbereitete Ende des Lichtwellenleiters einzuleiten oder aus diesem herauszuleiten. Hierbei ist es vorteilhaft, wenn das Koppelbauteil in der Lage ist, Strahlrichtung eines Lichtstrahls bezüglich wenigstens einer Orientierung zu verändern. Dies hat den Vorteil, dass beispielsweise die Einstrahlrichtung bzw. die Ausstrahlrichtung nicht in der gleichen zwei- bzw. dreidimensionalen Orientierung vorliegen muss wie das Ende des Lichtwellenleiters bzw. der Lichtwellenleiter selbst.

Gemäß einer Ausführungsform des Verfahrens ist das Koppelbauteil eingerichtet, die Form des Lichtstrahls mittels Beamshaping zu verändern. Um eine störungsfreie Funktion zu gewährleisten kann dieses Bauteil auch dazu verwendet werden, das austretende bzw. eintretende Licht im Sinne eines Beamshapings so zu formen, wie es den Systemanforderungen entspricht. Unter dem Begriff Beamshaping ist jegliche Art von Strahlformung zu Verstehen. Das Beamshaping bzw. die Strahlformung kann beispielsweise mittels einer oder mehreren Linsen oder Linsensystemen erfolgen. Dies hat den Vorteil, dass eine gewünschte anwendungsoptimierte Strahlgeometrie des in den Lichtwellenleiter einfallenden bzw. aus diesem ausfallenden Lichtes erfolgen kann.

Gemäß einer Ausführungsform des Verfahrens wird das Koppelbauteil fest mit dem Laminatbauteil fixiert. Sobald das Koppelbauteil in oder an der Bohrung bzw. Ausnehmung mit dem freigelegten Ende des Lichtwellenleiters positioniert ist, wird es in dieser Position fixiert. Durch die Fixierung an dem Laminatbauteil wird eine sichere Verbindung und Position zu dem freigelegten Ende des Lichtwellenleiters gewährleistet.

Gemäß einer Ausführungsform des Verfahrens erfolgt die Fixierung mittels Verschrauben, Verspannung und/oder Verkleben. Durch die Verschraubung, Verspannung oder Verklebung wird das Bauteil dauerhaft oder lösbar an dem Laminatbauteil fixiert. Eine dauerhafte Fixierung hat den Vorteil, dass die relative Position des Koppelbauteils zu dem freigelegten Ende des Lichtwellenleiters nahezu konstant ist. Bei einer lösbaren Fixierung kann beispielsweise das Koppelbauteil einfacher ersetzt werden. Vorteilhafterweise weist die Verbindung beide Vorteile auf.

Gemäß einer Ausführungsform des Verfahrens umfasst die vorbestimmte Position des wenigstens einen Lichtwellenleiters die Orientierung des Lichtwellenleiter in dem Laminatbauteil. Unter dem Begriff Orientierung ist die Ausrichtung des Lichtwellenleiters in zweidimensionaler bzw. dreidimensionaler Richtung in Kombination mit der Tiefeninformation Richtung bzgl. des Werkstoffbauteils zu verstehen.

Gemäß einer Ausführungsform des Verfahrens weist das Verfahren weiter den Schritt des Anbringens eines Verbindungselements an dem Koppelbauteil auf. Als Verbindungselement kann ein Stecker oder Adapter verstanden werden, der dazu in der Lage ist, das Koppelbauteil optisch beispielsweise mit einem anzuschließenden Messgerät zu verbinden.

Gemäß einer Ausführungsform des Verfahrens ist das Verbindungselement ein Opto-Stecker. Vorzugsweise wird an der Position des austretenden bzw. eintretenden Lichts auf der Oberfläche der Composite-Struktur ein Stecker an- bzw. aufgebracht. Als Opto-Stecker ist jedes Lichtwellenleiter-Verbindungselement zu verstehen, das in der Lage ist eine optische Signalübertragung bereit zu stellen. Beispielsweise ist das Verbindungselement Teil einer Lichtwellenleiter-Steckverbindung. Vorzugsweise weist das Verbindungselement eine möglichst geringe Signaldämpfung bzw. Einfügedämpfung, und eine hohe Rückflussdämpfung auf. Vorzugsweise ist das Verbindungselement in der Lage eine hohe Reproduzierbarkeit bzw. Aufrechterhaltung dieser Parameter über mehrere hundert Verbindungszyklen zu gewährleisten.

Gemäß einer Ausführungsform des Verfahrens weist das Verbindungselement eine Vorrichtung zur Aufweitung eines Lichtstrahls aus. Dieser kann auch zu Beispiel sogenannte expanded beam Technologien enthalten, um eine qualitativ hochwertige Weitergabe des Lichtsignales zu garantieren. Die Vorrichtung ist vorzugsweise in der Lage eine Vergrößerung eines optischen Strahldurchmessers zu ermöglichen. Dies ist z.B. erwünscht, um mit im Allgemeinen sehr dünnen Laserstrahlen auch größere Objekte ausleuchten zu können. Die Aufweitung kann beispielsweise durch verschiedene optische Linsensysteme erreicht werden. Beispielsweise kann die Aufweitung mittels eines teleskopischen Systems in umgekehrter Kepler-Anordnung oder umgekehrter Galilei-Anordnung erfolgen.

Gemäß einer Ausführungsform des Verfahrens ist der Lichtwellenleiter eine Sensor- und/oder Kommunikationsfaser. Unter eine Sensorfaser ist ein Lichtwellenleiter bzw. Lichtleiter zu verstehen, der wenigstens einen sensitiven Abschnitt bzw. Referenzabschnitt aufweist. Als sensitiver Abschnitt bzw. Referenzabschnitt werden Teilbereiche der Sensorfaser mit beispielsweise einer in Längenausrichtung der Sensorfaser gesehen begrenzten Länge bezeichnet, die die optische Sensitivität der Sensorfaser bewirken. Beispielsweise lässt sich die Biegung eines Bauteils über die Dehnungsmessung in x und y-Richtung und der entsprechenden Korrelation in welcher Tiefe der Struktur diese Dehnungen auftreten kann, ermitteln.

Alternativ kann auch eine Oberflächenbehandlung zur gezielten Steigerung von Verlusten bei der Übertragung des Messlichtes durch die Sensorfaser eingesetzt werden. Eine Biegeempfindlichkeit der Sensorfaser lässt sich beispielsweise erreichen, wenn der sensitive Abschnitt nur auf einer Seite des Umfanges der Sensorfaser angebracht wird (als Umfang ist die Ausdehnung der durch die Sensorfaser gebildeten Mantelfläche zu verstehen, wobei die Sensorfaser nicht notwendigerweise einen Kreisquerschnitt aufweisen muss). Dies hat den Vorteil, dass beispielsweise Verwindungen oder Bewegungen innerhalb der Struktur eines Laminatbauteils leicht detektiert werden können.

Gemäß einer Ausführungsform des Verfahrens weist der Lichtwellenleiter ein Faser-Bragg-Gitter auf, das einen mechanischen und/oder optischen Sensor bildet. Unter dem Begriff Faser-Bragg-Gitter sind in Lichtwellenleiter eingeschriebene optische Interferenzfilter zu verstehen. Wellenlängen, die innerhalb der Filterbandbreite um AB liegen, werden hierbei reflektiert. Hierzu besteht beispielsweise ein Abschnitt des Lichtwellenleiters aus mehreren Unterabschnitten (beispielwese mit einer Länge A/2 =Λ). Die Länge Λ setzt sich hierbei vorzugsweise aus zwei A/4 Stücken zusammen, die sich im Brechungsindex unterscheiden. An jeder Grenzfläche wird ein Teil der eingespeisten Amplitude durch die Fresnel-Reflexion (Fresnelsche Formeln (Senkrechter Einfall)) reflektiert. Die periodische Änderung des Brechungsindex bzw. der Wellenimpedanz bewirkt beispielweise, dass die reflektierte Welle am Ende jedes A/4 Stücks entweder einen Phasensprung von 0° oder 180° erfährt. Durch Mehrfachreflexion kann es beispielweise bei der reflektierten Welle zu konstruktiver Interferenz kommen.

Die Aufgabe wird weiter durch ein Laminatbauteil gelöst, das wenigstens einen Lichtwellenleiter aufweist. Der Lichtwellenleiter ist vollständig in dem Laminatbauteil eingebettet. Das Laminatbauteil weist wenigstens ein Koppelbauteil auf. Das Koppelbauteil ist wenigstens mit einem freigelegten Ende des wenigstens einen Lichtwellenleiters verbunden. Das Koppelbauteil ist fest mit dem Laminatbauteil verbunden.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: ein Ablaufdiagramm für eine Ausführungsform des Verfahrens zeigt;
- FIGs. 2a - 2f: einzelne Verfahrensschritte im Detail zeigen;
- FIG. 3: eine Ausführungsform eines Laminatbauteils mit integriertem Lichtwellenleiter zeigt; und
- FIG. 4: eine weitere Ausführungsform eines Laminatbauteils mit integriertem Lichtwellenleiter zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielsweise" wird hierin verwendet mit der Bedeutung "als ein Beispiel, Fall oder Veranschaulichung dienend". Jede Ausführungsform oder Ausgestaltung, die hierin als "beispielsweise" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die einen Teil dieser Beschreibung bilden und in denen zur Veranschaulichung spezifische Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert. In den Figuren werden identische oder ähnliche Elemente mit identischen Bezugszeichen versehen, soweit dies zweckmäßig ist.

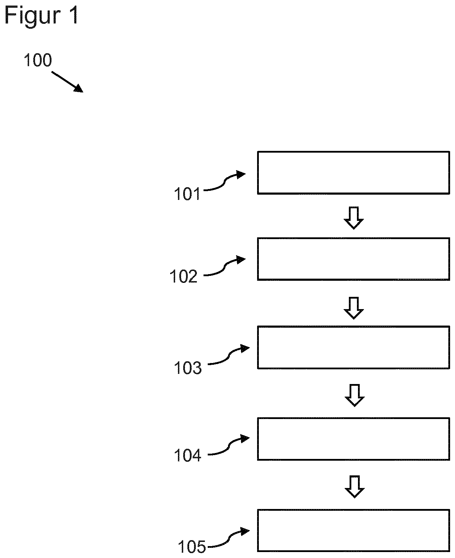

Figur 1 zeigt ein Ablaufdiagramm für eine Ausführungsform des Verfahrens zur Implementierung und Anbindung wenigstens eines strukturintegrierten Lichtwellenleiters in einem Laminatbauteil. In Schritt 101 wird wenigstens ein Lichtwellenleiter während eines Ablagevorgangs eines Laminates zur Herstellung einer Preform (oder Vorform) eines Laminatbauteils eingebracht. In Schritt 102 wird die Position des wenigstens einen Lichtwellenleiters in der Preform gespeichert. In Schritt 103 wird das Laminatbauteil fertiggestellt, wobei der Lichtwellenleiter vollständig von dem Laminat umgeben ist. In Schritt 104 wird wenigstens ein Ende des Lichtwellenleiters freigelegt. In Schritt 105 wird ein Einkoppelbauteil an dem aufbereiteten Ende des Lichtwellenleiters angebracht.

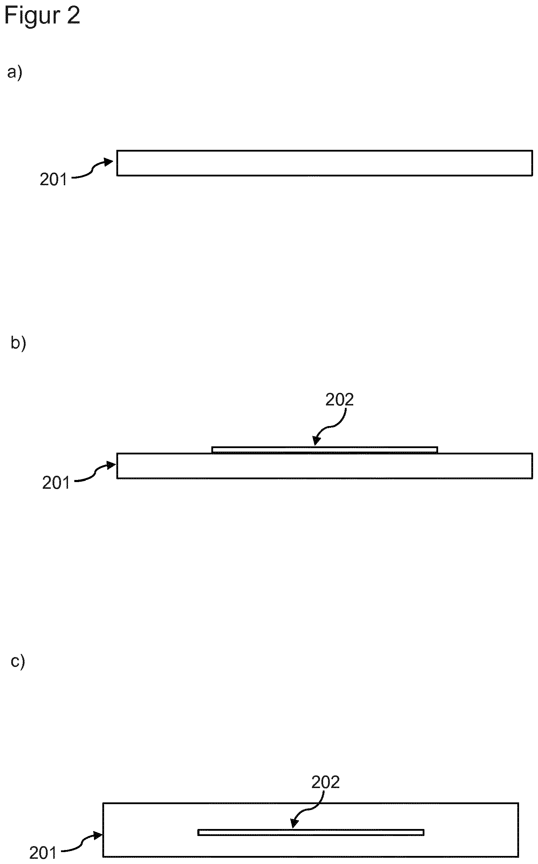

Die Figuren 2a - 2f zeigen die einzelnen Verfahrensschritte des Verfahrens zur Implementierung und Anbindung wenigstens eines strukturintegrierten Lichtwellenleiters in einem Laminatbauteil im Detail.

Bei dem in Figur 2a dargestellten Verfahrensschritt wird ein Teil einer Preform eines Laminatbauteils erzeugt. In der Regel besteht ein Laminatbauteil, beispielsweise ein Kompositbauteil aus Kohlefasern aus mehreren Schichten, die während des Herstellungsprozesses übereinandergelegt werden oder aus gewebten Kohlefasermatten bestehen. Diese Kohlefasermatten werden, wenn sie bereits mit Harz getränkt sind auch Prepreg genannt bzw. Trockengewebe oder Gelege, wenn sie nicht bereits imprägniert sind. In der Figur 2a umfasst das Laminatbauteil 201 beispielsweise bereits eine oder mehrere Lagen auf die der Lichtwellenleiter 202 im nächsten Schritt, dargestellt in der Figur 2b, aufgebracht wird.

Bei dem in Figur 2b dargestellten Verfahrensschritt wird ein Lichtwellenleiter 202 auf den bereits hergestellten Teil der Preform des Laminatbauteils aufgebracht. Während des Ablegens der einzelnen Schichten bzw. Lagen oder der Einzelfasern (CFRP - Carbon Fibre Reinforced Polymers) wird wenigstes ein Lichtwellenleiter 202 auf bzw. zwischen den bereits abgelegten Kohlefasermatten bzw. abgelegten Einzelfasern an einer vorbestimmten Position abgelegt. Anhand der vorbestimmten Position des Lichtwellenleiters 202 im späteren fertigen Laminatbauteil 201 kann dieser in den folgenden Schritten möglichst genau lokalisiert werden.

In Figur 2c wird das Laminatbauteil 201 fertiggestellt. In der Regel wird nach dem Auflegen der Karbonfasermatten bzw. dem Abschließen des Ablegens der Einzelfasern ein Harz eingebracht, das in die Zwischenräume der Karbonfasern infiltriert. In einem anschließenden Verfahrensschritt wird das Laminatbauteil beispielsweise durch Erwärmen ausgehärtet. Der Lichtwellenleiter 202 ist nach Abschluss der Herstellung des Laminatbauteils 201 vollständig von dem Laminat umgeben.

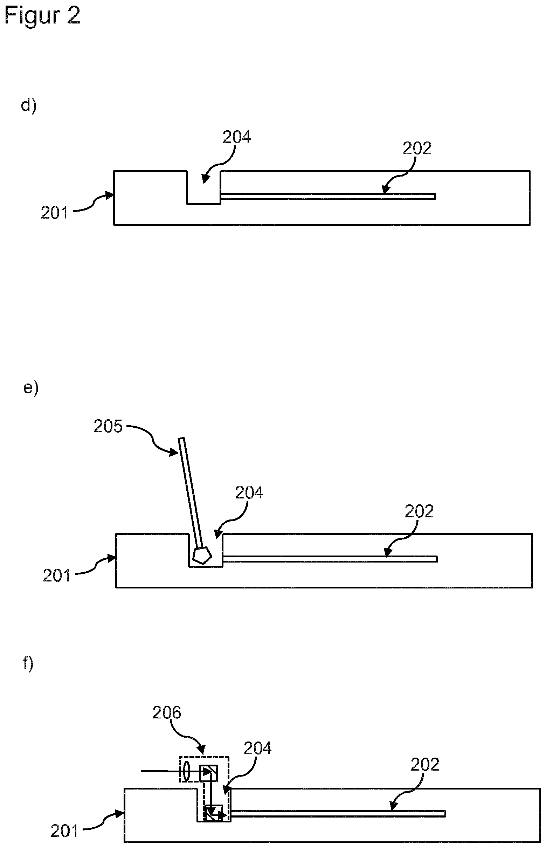

In Figur 2d wird wenigstens ein Ende des Lichtwellenleiters 202 freigelegt. Dies kann beispielsweise mechanisch mittels Bohren oder Fräsen erfolgen. Hierbei wird anhand der vorbestimmten und gespeicherten Position des Lichtwellenleiters 202 in dem Laminatbauteil 201, wie in Figur 2b dargestellt, beispielweise eine Ausnehmung 204 im Bereich eines Endes des Lichtwellenleiters 202 erzeugt. In einer nicht dargestellten Ausführungsform können auch weitere Ausnehmungen, beispielsweise an dem zweiten Ende des Lichtwellenleiters oder in einem Zwischenbereich erzeugt werden.

In Figur 2e wird das freigelegte Ende des Lichtwellenleiters 202 beispielsweise mittels einer Poliereinheit 205 aufbereitet. Die Aufbereitung des freigelegten Endes des Lichtwellenleiters 202 kann auch beispielsweise auf andere nicht dargestellte Verfahren erfolgen.

In Figur 2f wird ein Einkoppelbauteil 206 an dem aufbereiteten Ende des Lichtwellenleiters 202 angebracht. Das Einkoppelbauteil 206 wird in einem weiteren nicht dargestellten Verfahrensschritt an dem Laminatbauteil 201, beispielsweise mittels Verschrauben, Verspannen oder Verkleben fixiert.

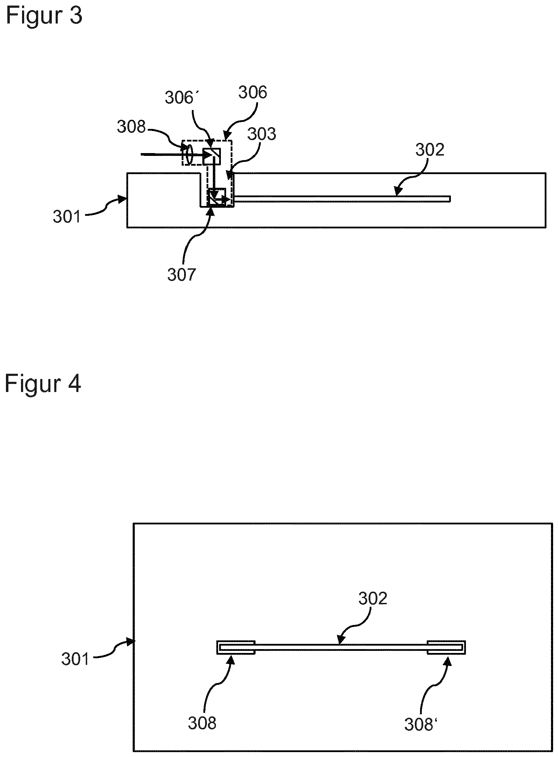

Figur 3 zeigt eine Ausführungsform eines Laminatbauteils 301 mit integriertem Lichtwellenleiter 302. Der Lichtwellenleiter 302 ist vollständig von dem Laminatbauteil 301 umgeben. In der dargestellten Ausführungsform ist ein Ende des Lichtwellenleiters 302 durch eine Ausnehmung 303 in dem Laminatbauteil 301 freigelegt. In der Ausnehmung 303 ist ein Einkoppelbauteil 306 eingebracht. Das Einkoppelbauteil 306 weist in der dargestellten Ausführungsform zwei Spiegel 307, 307' und eine Linse 308 auf. Mittels der Linse 308 und den Spiegeln 307, 307' kann ein Lichtstrahl in den Lichtwellenleiter 302 eingeleitet werden. Der Lichtwellenleiter 302 kann hierbei beispielsweise eine Sensorfaser, nicht dargestellt, sein, mit deren Hilfe sich Verwindungen im Laminatbauteil 301 detektieren lassen können.

Figur 4 zeigt eine weitere Ausführungsform eines Laminatbauteils 301 mit integriertem Lichtwellenleiter 302. Der Lichtwellenleiter 302 ist vollständig von dem Laminatbauteil 301 umgeben. In der dargestellten Ausführungsform sind die beiden Enden des Lichtwellenleiters 302 mit einer Schutzhülle 308, 308' umgeben. Die Schutzhülle 308, 308' wird in dem Schritt zur Freilegung des wenigstens einen Endes des Lichtwellenleiters (siehe beispielweise Figur 2d) wenigstens teilweise entfernt. Die Entfernung der Schutzhülle 308, 308' kann beispielsweise mittels eines Lasers (nicht dargestellt) erfolgen. Die von der Schutzhülle 308, 308' umhüllten Enden des Lichtwellenleiters 302 sind in der dargestellten Ausführungsform linear ausgerichtet. In einer weiteren nicht dargestellten Ausführungsform können die Enden auch aufgerollt, schlangenförmig oder anderweitig vorliegen und von einer Schutzhülle umgeben sein. In einer weiteren nicht dargestellten Ausführungsform kann der Lichtwellenleiter auch über die gesamte Länge von einer Schutzhülle umgeben sein.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn oder den Äquivalenzbereich der Ansprüche fallen, umfasst werden.

### Bezugszeichenliste

- 100: Verfahren
- 101-106: Verfahrensschritte
- 201, 301: Laminatbauteil
- 202, 302: Lichtwellenleiter
- 204, 304: Ausnehmung
- 205: Poliereinheit
- 206, 306: Koppelbauteil
- 307, 307': Spiegel
- 308: Linse

## Patentansprüche

1. Verfahren (100) zur Implementierung und Anbindung wenigstens eines strukturintegrierten Lichtwellenleiters in einem Laminat, aufweisend die Schritte:
Einbringen wenigstens eines Lichtwellenleiters an einer vorbestimmten Position während eines Laminierens eines Laminats zur Herstellung eines Laminatbauteils (101);
Fertigstellen des Laminatbauteils, wobei der Lichtwellenleiter vollständig von dem Laminat umgeben ist (103) ;
Freilegen wenigstens eines Endes des Lichtwellenleiters (104); und
Anbringen eines Einkoppelbauteils an dem wenigstens einen freigelegten Ende des Lichtwellenleiters (105).

2. Verfahren nach Anspruch 1,
wobei die Freilegung wenigstens eines Endes des Lichtwellenleiters mittels Laser, Bohren oder Fräsen erfolgt.

3. Verfahren nach Anspruch 1 oder 2,
wobei das wenigstens eine Ende des Lichtwellenleiters mit einer Schutzhülle umgeben ist, die nach dem Freilegen des wenigstens einen Endes wenigstens teilweise geöffnet oder entfernt wird.

4. Verfahren nach einem der vorhergehenden Ansprüche,
wobei das freigelegte Ende des Lichtwellenleiters aufbereitet wird.

5. Verfahren nach Anspruch 4,
wobei die Aufbereitung des wenigstens einen Endes des Lichtwellenleiters mittels Polieren oder Schleifen erfolgt.

6. Verfahren nach einem der vorherstehenden Ansprüche,
wobei das Einkoppelbauteil dazu eingerichtet ist, einen in das Ende des Lichtwellenleiters eingeleiteten Lichtstrahl in und/oder einen aus dem Ende des Lichtwellenleiters herausgeleiteten Lichtstrahl aus dem Laminatbauteil zu leiten.

7. Verfahren nach Anspruch 6,
wobei das Einkoppelbauteil eingerichtet ist, die Form des Lichtstrahls mittels Beamshaping zu verändern.

8. Verfahren nach einem der Ansprüche 1 bis 7,
wobei das Einkoppelbauteil fest mit dem Laminatbauteil verbunden wird.

9. Verfahren nach Anspruch 8,
wobei die Verbindung mittels Verschrauben, Verspannung und/oder Verkleben erfolgt.

10. Verfahren nach einem der vorherstehenden Ansprüche,
wobei die vorbestimmte Position des wenigstens einen Lichtwellenleiters die Orientierung des Lichtwellenleiter in dem Laminatbauteil umfasst.

11. Verfahren nach einem der Ansprüche 1 bis 10,
wobei das Verfahren weiter den Schritt des Anbringens eines Verbindungselements an dem Einkoppelbauteil aufweist

12. Verfahren nach Anspruch 11,
wobei das Verbindungselement ein Opto-Stecker ist und/ oder wobei das Verbindungselement eine Vorrichtung zur Aufweitung eines Lichtstrahls ausweist.

13. Verfahren nach einem der vorhergehenden Ansprüche,
wobei der Lichtwellenleiter eine Sensor- und/oder Kommunikationsfaser ist.

14. Verfahren nach einem der vorhergehenden Ansprüche,
wobei der Lichtwellenleiter ein Faser-Bragg-Gitter aufweist, das einen mechanischen und/oder optischen Sensor bildet.

15. Laminatbauteil (301), aufweisend:
wenigstens einen Lichtwellenleiter (302);
wobei der Lichtwellenleiter (302) vollständig in dem Laminatbauteil (301) eingebettet ist;
wenigstens ein Einkoppelbauteil (304), das mit wenigstens einem freigelegten Ende des wenigstens einen Lichtwellenleiters (302) verbunden ist; und
wobei das Koppelbauteil (304) fest mit dem Laminatbauteil (301) verbunden ist.
